# EUROPEAN PATENT APPLICATION

(11) **EP 1 593 480 A1**
(43) Date of publication of application: **09.11.2005**
(21) Application number: 04101756.7
(22) Date of filing: 27.04.2004
(51) Int. Cl.: B29C 67/24, B29C 45/14, B29C 49/20, B29D 23/00, B29C 63/10, B29C 47/02, B32B 1/08, B32B 27/08

(54) **Reinforcement of polymer bodies with oriented strips**

(71) Applicant: SOLVAY (Société Anonyme), 1050 Bruxelles (BE)
(72) Inventor: Dehennau, Claude, 1410 Waterloo (BE); Matz, Pierre, 1457 Nil-Saint-Vincent (BE)
(74) Representative: Jacques, Philippe

(57) **Abstract**

Process for the manufacture of a multi-layered polymer body comprising at least one reinforcing layer composed of an oriented polymer and at least one basic polymer layer directly in contact with at least a part of the reinforcing layer, wherein the polymer of the basic layer is compatible with the oriented polymer of the reinforcing layer, characterized by the steps of
(a) applying the basic polymer layer as a stream of molten polymer to at least a part of the surface of the reinforcing layer; and
(b) solidifying the molten polymer on the surface of the reinforcing layer by rapid cooling.

## Description

The present invention relates to a process for the manufacture of reinforced polymer bodies such as tubes, connecting pieces (or fittings) and containers for liquids or gases.

Although polymer bodies having good mechanical properties are available in plenty of forms and sizes, for certain applications, reinforcement is necessary in order to rigidify the polymer bodies and to increase their resistance against internal pressure. In particular, containers of a high capacity or tubes of a big diameter need further mechanical support. The reinforcement may be realized either by intermediate heterogeneous elements such as fibers made from glass, carbon or aramide or by means of metallic elements such as metallic belts which can be applied e.g. to a fuel tank after its production by injection molding.

Several methods for reinforcing polymer bodies make use of oriented thermoplastic polymers which have been subject to extensive investigation and research. It is known from the prior art that stretching a semi-crystalline polymer film at a temperature slightly below its melting temperature results in a monoaxial orientation of the polymer chains in longitudinal direction. Techniques for the manufacture of oriented polymers rely on realigning the existing crystal structure into a highly oriented fibrilliar structure by an extension deformation process. Such mono-axially oriented polymers exhibit certain mechanic properties which are superior over the properties of non-oriented polymers. For example, reinforced polymer strips made of mono-axially oriented polymers may be applied to tubes for enhancing their resistance against hydrostatic pressure. In comparison to conventional tubes not supported by said reinforced polymer strips, the working pressure may be increased or the thickness of the tube, which is required to withstand the pressure the tube is exposed to, may be decreased.

Because of their low costs and their ability of being recycled, particularly when the components of the composite materials are composed of the same type of polymer, the use of oriented polymers for reinforcing polymer bodies is advantageous when compared with conventional methods using metallic belts, fibers and the like.

To achieve an optimal reinforcing effect the oriented polymer is preferably brought into intimate contact with the polymer body. Techniques based on adhesives have been proposed for fixing reinforcing elements to each other or on a support. However, these techniques may only be realized with a few polymers, but not with polymers which are of particular interest, such as high density polyethylene (HDPE), polypropylene (PP) and polyvinylidene fluoride (PVDF). Furthermore, there is no intimate contact between the reinforcing elements and the support, as the layer formed by the adhesive is in between. The use of an adhesive also impairs the recycling process, as the chemical nature of the adhesive usually differs from the chemical nature of the polymers the adhesive is applied to.

Techniques to achieve an intimate contact between a reinforcing element composed of an oriented polymer and an element composed of a non-oriented polymer (or a further oriented polymer) rely on the thermoplastic properties of most polymers and more particularly, on their ability to fuse together.

However, such methods are usually faced with the problem that the orientation of the molecular chains within the oriented polymer is reversible at high temperatures, particularly above the melting point. In the molten state the mobility of the molecular chains is sufficiently high to allow random orientation thereby destroying the internal fibrilliar structure which is responsible for the superior mechanical properties. Therefore, high temperatures should generally be avoided when processing oriented polymers. Accordingly, it was generally admitted that oriented and non-oriented polymers may not be connected by recasting without destroying the internal structure of the oriented polymer.

The reversibility of the orientation process mentioned above becomes particularly relevant when it is intended to contact a non-oriented polymer in its molten state with an oriented polymer of the same chemical nature in its solid state. As the melting temperature of the non-oriented polymer and the oriented polymer are identical or very close to each other, one should expect that the heat transfer at the contact area is sufficiently high to melt the oriented polymer thereby destroying its internal fibrilliar structure. Accordingly, so far it has not been proposed in the prior art to contact a reinforcing element composed of an oriented polymer with a stream of a molten polymer, as a skilled person would expect the heat emitted by the molten polymer to disturb the fibrilliar orientation of the molecular chains within the oriented polymer.

To avoid said heat transfer processes have been developed wherein a layer composed of an oriented polymer is protected by an intermediate layer of non-oriented polymer serving as a thermal shield (cf. e.g. WO 01/087874 and WO 02/088589). WO 02/088589 discloses a process for the manufacture of a reinforced plastic tube comprising the step of winding in a specific manner at least two layers of reinforcing strips composed of oriented polymers around a tubular polymeric mandrel. Preferably, the orientation of the polymer molecules within the reinforcing strips is protected by winding a thin thermal protection strip around the reinforcing layer. The thermal protection strip is composed of a non-oriented polymer which is compatible with the oriented polymer of the subjacent layer. Thereafter, an exterior finishing layer is extruded over the layer formed by said thin thermal protection strips. The exterior finishing layer is composed of a non-oriented polymer which is compatible with the subjacent thin thermal protection strips. Advantageously, the thickness of the layer formed by the thin thermal protection strips is adjusted so that it serves as an effective thermal shield thereby maximally limiting the loss of orientation of the oriented polymers within the reinforcing strips during the extrusion of the finishing layer.

However, there is no intimate contact between the reinforcing strips and the finishing layer, as the layer formed by the thermal protection strip is in between. Furthermore, the additional step of applying the thermal protection strip is required in order to produce the reinforced polymer body, which is expensive.

Therefore, there is a demand for an economical process for the manufacture of reinforced polymer bodies which has advantages over the prior art and, in particular, in which a comparably large portion of the surface of a non-oriented polymer is directly and intimately contacted with an oriented polymer without significantly destroying the internal fibrilliar structure of the oriented polymer. The reinforced polymer bodies should have comparable, preferably better properties than the polymer bodies of the prior art, in particular, they should exhibit a good reinforcing effect, i.e. the portion of the oriented molecular chains within the reinforcements should be as high as possible and should not be significantly decreased by the process of manufacture.

It has been surprisingly found that the fibrilliar structure within an oriented polymer is not significantly disturbed when a solid layer of an oriented polymer is directly and intimately contacted with a stream of a molten polymer, provided that the latter is rapidly cooled. Accordingly, the present invention provides a process for the manufacture of a multi-layered polymer body comprising comprising at least one reinforcing layer composed of an oriented polymer and at least one basic polymer layer directly in contact with at least a part of the reinforcing layer, wherein the polymer of the basic layer is compatible with the oriented polymer of the reinforcing layer, characterized by the steps of
(a) applying the basic polymer layer as a stream of molten polymer to at least a part of the surface of the reinforcing layer; and
(b) solidifying the molten polymer on the surface of the reinforcing layer by rapid cooling.

The inventors of the present invention have surprisingly found that it is possible to extrude or to inject molten polymers along strips composed of oriented polymers without thermally protecting them and without significantly altering their properties, provided that the molten polymer is rapidly cooled once it has been placed on the layer composed of the oriented polymer. In that case, just a very thin portion of the oriented polymer's thickness (only a few µm of generally 500 µm to 1.5 mm) is molten allowing the oriented strip to be perfectly connected to the solidified polymer but retaining the orientation of the large majority of the molecular chains.

The process according to the present invention provides a simple and effective process for the manufacture of reinforced polymer bodies. This technique may be realized by a high number of procedures without the use of thermally insulating layers or special and expensive adhesives. Therefore, a full ability of being recycled is achieved. Furthermore, the technique allows a facile processing of the reinforced polymer bodies. In view of the relative simplicity of producing reinforced polymer strips which may serve as reinforcing elements, the costs of the process are minimized.

By "polymer" according to the present invention is meant any composition including a synthetic resin, most preferably a thermoplastic resin which may be a homopolymer, copolymer... Such resin may be a polyolefm, a polyvinyl(idene) halide (like PVC (polyvinyl chloride) or PVDF (polyvinylidene fluoride) for instance), a polyketone, a polyamide (PA). Good results have been obtained with polyolefins, more particularly with polyethylene (PE) and most particularly, with HDPE (High Density PolyEthylene). In addition to said synthetic resin, the composition may contain any usual additive like stabilizer, filler, plasticizer...

As explained above, the polymer of the reinforcing layer and the one of the basic layer must be compatible. Most preferably, for the ease of recycling of the polymer body, they are identical.

The key of the process according to the present invention is the rapid cooling of the molten polymer in contact with the oriented polymer. Preferably, the polymer of the basic layer directly in contact with the reinforcing layer is cooled at a speed of higher or equal to 10°C per second (°C/s) and most preferably, higher or equal to 100°C/s. In fact, what is crucial is the fact that the core of the oriented polymer layer should not get at a temperature too close to its orientation temperature. Most particularly in the case of HDPE (high density polyethylene) as the oriented polymer, this generally means that the core should not exceed a temperature of about 100°C. The optimization of the speed/intensity of cooling is easily performed by a person of ordinary skill in the art, using common cooling fluids (like water for instance).

Also, the way in which the stream of molten polymer of the basic layer is applied to the reinforcing layer is not critical and will mostly be depending on the kind of polymer body. For pipes for instance, extrusion gives good results; for fittings, injection can be used and for containers, blow molding can be used.

According to a preferred embodiment, the surface of the reinforcing layer which will be in contact with the molten polymer is embossed (i.e. roughened with a given profile) before said contact in order to promote the adhesion of the molten polymer thereon. An embossing heaving a depth equal or greater than 50 µm, or even than 100 µm, gives good results. Any method for embossing the strip may be used; most preferably, the embossment is performed by laminating the oriented tape between two rolls.

The process according to the present invention may be used for the manufacture of several reinforced polymer bodies, preferably hollow polymer elements such as containers, fittings or pipes.

Regarding a process for the manufacture of reinforced containers or fittings, reinforcing elements comprising oriented strips may be directly positioned in a mould before injecting a stream of a molten polymer (mostly in the case of fittings) or inserting a parison of molten polymer (mostly in the case of containers) into the mould. After rapid cooling by a cold water cooled mould and solidification, the molten polymer will constitute the basic polymer layer of the polymer body, which in this case is the inner layer of the body

According to a preferred embodiment, the hollow polymer element is a fuel tank and most preferably, a fuel tank made of HDPE. In that case, the placement of the reinforcing elements (also made of HDPE) at the bottom of the mould allows the manufacture of a fuel tank having a reinforced bottom preventing its deformation, especially when the tank is large and bears high loads of fuel. The possibility of placing the reinforcement in the blow mould allows omitting the step of applying a metallic belt to the fuel tank after its manufacture.

Regarding a process for the manufacture of reinforced polymer pipes, in a first step, a support pipe may be provided, for instance by extrusion. Then, the reinforcing layer may be applied by winding a reinforced polymer strip composed of an oriented polymer around the support pipe. Finally, the basic polymer layer (in this case, the outer, fmishing layer) is applied on top of the reinforcing layer and rapidly cooled in a cold water bath.

Most preferably in that case, the polymer strip is adhered to the support pipe by applying electromagnetic irradiation, for instance by using a laser welding machine. More details regarding this technique can be found in patent application FR 2836652, the content of which is incorporated by reference in the present application.

According to this embodiment, the reinforced polymer strip is preferably wound at least twice (or two separated oriented strips, eventually themselves wound on a mandrel, can be wound around it, one after another) thereby defining an angle between the windings. This angle is by definition different from 0 and 180°C, i.e. the windings of both layers are not parallel. Most preferably, each layer has windings having an angle (with respect to the extrusion direction of the support pipe) equal in absolute value to the angle of the windings of the other layer, but with an opposite sign. Such pipes are described in more details in WO 02/088589, the content of which is incorporated by reference in the present application.

In the above mentioned embodiments using a reinforced (oriented) polymer strip, said strip may be a multilayer strip, for instance obtained by coextrusion and simultaneous drawing (orientation) of the layers. More specifically, this strip may comprise 2 layers, A and B, layer A being the thickest and comprising preferably 95 to 99% of the total thickness of the strip, while layer B would be a kind of surface layer, intended to be in contact with the molten polymer and whose nature would be chosen so as to promote adhesion with said molten polymer. In that regard, while layer A is preferably made of the same polymer than the molten one (mainly for ease of recycling), layer B would preferably be made of a polymer of the same nature and/or compatible with the molten polymer, but having a lower molecular weight and/or fusion temperature. For example, in the case the molten polymer and layer A would be made of HDPE, layer B could be a LDPE.

The present invention is illustrated in a non limitative way by the following examples.

### Example 1.

An oriented HDPE (high density polyethylene, grade Eltex® TUB 121 from BPS) strip of 1.2 mm has been obtained by extrusion and monoaxial orientation of a factor 10 at a temperature of about 115°C (the melting point of the HDPE being 142°C). This has been achieved by:
■ first extruding the HDPE using a KUHNE extruder equipped with a screw of 60 mm diameter rotating at a speed of 50 rpm (throughput of 50 kg/h) and with a flat JOHNSON die 300 mm wide and 8 mm deep;
■ sizing the obtained sheet through a calendar equipped with 3 rolls at 50°C;
■ heating the sized sheet at 115°C through 6 conditioning rolls;
■ mono-orienting the heated sheet in 2 stages (680% followed by 30%, which gives the factor 10; (= (100+680)/100 X (100+30)/100)
■ cooling and slightly relaxing the sheet (10% for the thermal shrinking and elastic return).

A square of 10cmx10cm of this material has been placed in a square mould of the same size and a 5 mm layer of molten HDPE at 205°C has been injected in that mould, and rapidly cooled. To achieve the rapid cooling, the mould is cooled by cold water.

The flexural properties (modulus and strain) are twice those of a non reinforced plate of the same thickness and the same material.

### Example 2

Example 1 has been repeated but by putting 2 reinforcing strips in the mould, one on each side of the injected plate. The flexural properties are 4 times those of a non reinforced plate of the same thickness and the same material.

## Claims

1. Process for the manufacture of a multi-layered polymer body comprising at least one reinforcing layer composed of an oriented polymer and at least one basic polymer layer directly in contact with at least a part of the reinforcing layer, wherein the polymer of the basic layer is compatible with the oriented polymer of the reinforcing layer, **characterized by** the steps of
(a) applying the basic polymer layer as a stream of molten polymer to at least a part of the surface of the reinforcing layer; and
(b) solidifying the molten polymer on the surface of the reinforcing layer by rapid cooling.

2. Process according to claim 1, wherein the surface of the reinforcing layer which will be in contact with the molten polymer is embossed.

3. Process according to any preceding claim, wherein the multi-layered polymer body is a hollow polymer element.

4. The process according to claim 3, wherein the hollow polymer element is a container or a fitting.

5. Process according to claim 4, wherein the reinforcing layer is applied by positioning at least one reinforced polymer strip into a mould before injecting or inserting the basic polymer layer into the mould.

6. Process according to claim 4 or 5, wherein the hollow polymer element is a fuel tank.

7. The process according to claim 3, wherein the hollow polymer element is a pipe.

8. Process according to claim 7, **characterized in that** the reinforcing layer is applied by winding a reinforced polymer strip composed of an oriented polymer around a support pipe and that the basic polymer layer is applied on top of the reinforcing layer.

9. Process according to claim 8, wherein the support pipe is also made of a polymer compatible with the oriented polymer of the reinforcing layer and that the reinforced polymer strip is adhered to it by applying electromagnetic irradiation.

10. Process according to claim 8 or 9, **characterized in that** the reinforced polymer strip is wound at least twice around the support, the windings on top of each other defining an angle different from 0 and 180°.
